(19) Europäisches Patentamt
European Patent Office
Office européen des brevets

(11) EP 4 620 994 A1

(12) **EUROPEAN PATENT APPLICATION**
published in accordance with Art. 153(4) EPC

(43) Date of publication:
**24.09.2025 Bulletin 2025/39**

(21) Application number: **24750532.4**

(22) Date of filing: **30.01.2024**

(51) International Patent Classification (IPC):
***C08G 63/06*** *(2006.01)* ***C08G 63/78*** *(2006.01)*
***C08G 63/82*** *(2006.01)*

(52) Cooperative Patent Classification (CPC):
**C08G 63/06; C08G 63/78; C08G 63/82**

(86) International application number:
**PCT/KR2024/001402**

(87) International publication number:
**WO 2024/162734 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 KR 20230012861**

(71) Applicant: **LG CHEM, LTD.**
**Seoul 07336 (KR)**

(72) Inventors:
- **JEONG, Cheolhwan**
  **Daejeon 34122 (KR)**
- **LEE, Yeonju**
  **Daejeon 34122 (KR)**
- **KIM, Kyeongmin**
  **Daejeon 34122 (KR)**
- **CHOE, Dongcheol**
  **Daejeon 34122 (KR)**
- **KIM, Chul Woong**
  **Daejeon 34122 (KR)**

(74) Representative: **Plasseraud IP**
**104 Rue de Richelieu**
**CS92104**
**75080 Paris Cedex 02 (FR)**

(54) **POLY(HYDROXYALKANOATE) AND METHOD FOR PRODUCING SAME**

(57) The present disclosure prepares poly(hydroxyalkanoate) by reacting an oligomer, which is prepared by polymerizing a hydroxyalkanoic acid with a compound having two or more hydroxyl groups and a compound having two or more carboxyl groups, thereby making it possible to prepare a poly(hydroxyalkanoate) having a low ratio of a vinyl group in end groups and reducing the yellow index(YI) value and nitrogen content as well as having a high molecular weight.

EP 4 620 994 A1

## Description

## FIELD OF THE INVENTION

CROSS-REFERENCE TO RELATED APPLICATION(S)

This application claims priority to and the benefit of Korean Patent Application No. 10-2023-0012861, filed on January 31, 2023, and Korean Patent Application No. 10-2024-0013786, filed on January 30, 2024 with the Korean Intellectual Property Office, the disclosure of which is incorporated herein by reference in its entirety.

The present disclosure relates to a poly(hydroxyalkanoate) and a method for preparing the same.

## BACKGROUND OF THE INVENTION

Poly(3-hydroxypropionic acid) has biodegradable properties, and due to these eco-friendly properties, research using the same has been actively conducted in recent years.

The method for preparing poly(3-hydroxypropionic acid) can be broadly classified into two types: one is a petrochemical-based method using β-propiolactone (PL), and the other is a bio-based method using 3-hydroxypropinic acid(3HP).

When PL is used, it must go through several synthesis steps using ethylene oxide, which is disadvantageous in terms of economic efficiency compared to when 3HP is used. In addition, in the case of poly(3-hydroxypropionic acid) prepared using PL, it has a bio content of 0% and, particularly, an acrylic acid series having a vinyl group is used as an initiator, which causes a problem that the ratio of a vinyl group in the end group is high.

In the case of polymerization using the biosynthesis of 3HP, it must go through several steps such as freeze-drying, ultra-sonication, and elution using a solvent to obtain poly(3-hydroxypropionic acid), and in this case, a large amount of solvent must be used. In the case of biosynthesis polymerized in this way, the bio content of poly(3-hydroxypropionic acid) is 100%, but due to the residues remained after fermentation, it contains a large amount of organic nitrogen and has a high YI.

In order to solve this problem, attempts have been made to subject 3HP to condensation polymerization, but there is a limitation in obtaining poly(3-hydroxypropionic acid) with a high molecular weight due to byproducts in the form of cyclic oligomers. Attempts have been made to increase the molecular weight by subjecting cyclic oligomers with a low molecular weight to ROP(ring-opening polymerization), but there are difficulties in separation and purification.

Therefore, there is a need to develop a method of preparing a poly(3-hydroxypropionic acid) by condensation polymerization of 3HP, and also preparing poly(3-hydroxypropionic acid) having a low ratio of a vinyl group in end groups as well as having a high molecular weight.

## SUMMARY OF THE INVENTION

## TECHNICAL PROBLEM

It is an object of the present disclosure to provide a poly(hydroxyalkanoate) having a low ratio of a vinyl group in end groups and reducing the yellow index(YI) value and nitrogen content as well as having a high molecular weight.

It is another object of the present disclosure to provide a method for preparing the poly(hydroxyalkanoate).

## TECHNICAL SOLUTION

According to an embodiment of the present disclosure, there is provided a poly(hydroxyalkanoate) comprising a repeating unit represented by the following Chemical Formula 1 and/or a repeating unit represented by the following Chemical Formula 2:

[Chemical Formula 1]

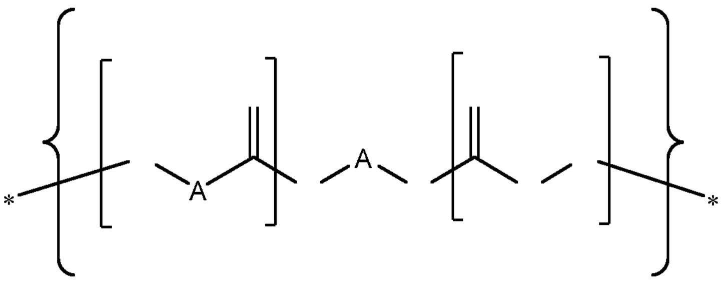

[Chemical Formula 2]

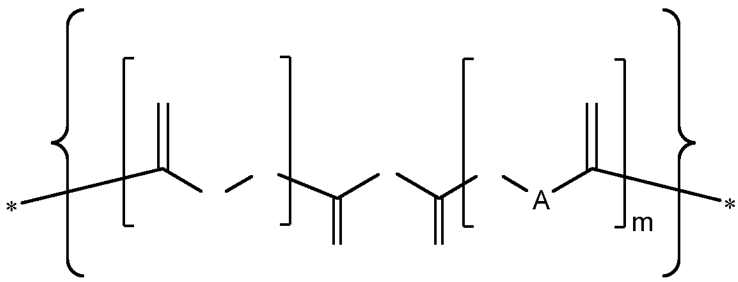

wherein in Chemical Formulas 1 and 2,

A, G, Q and R are each independently a substituted or unsubstituted alkylene having 1 to 10 carbon atoms,
X and Y are each independently a substituted or unsubstituted alkylene having 1 to 20 carbon atoms; a substituted or unsubstituted arylene having 6 to 60 carbon atoms; or a substituted or unsubstituted heteroarylene having 2 to 60 carbon atoms containing at least one heteroatom selected from the group consisting of **N,** O and S,
p, q, m and n are each independently an integer of 0 to 200,
p + q is 1 or more, and
n + m is 1 or more.

According to another embodiment of the present disclosure, there is provided a method for preparing a poly(hydroxyalkanoate), comprising:

(step 1) subjecting a hydroxyalkanoic acid to polymerization reaction in the presence of a compound having two or more hydroxyl groups to prepare a first oligomer;
(step 2) subjecting a hydroxyalkanoic acid to polymerization reaction in the presence of a compound having two or more carboxyl groups to prepare a second oligomer; and
(step 3) subjecting the first oligomer and the second oligomer to polymerization reaction to prepare a poly(hydroxyalkanoate).

Now, a poly(hydroxyalkanoate) and provided a method for preparing a poly(hydroxyalkanoate) according to specific embodiments of the present disclosure will be described in more detail.
Further, the steps constituting the preparation method described herein are not construed as being limited to the order in which one step and the other steps constituting one preparation method are described herein, unless explicitly stated as being sequential or continuous order or otherwise specified. Therefore, the order of the constituent steps of the preparation method can be changed within a range that can be easily understood by those skilled in the art, and in this case, changes apparent to those skilled in the art accompanying therewith are included in the scope of the invention.
The terms "first," "second," etc. are used herein to described various elements, and these terms are only used to distinguish one constitutional element from the other constitutional elements.
As used herein, the term "substituted or unsubstituted" means being unsubstituted or substituted with one or more substituent groups selected from the group consisting of deuterium; a halogen group; a nitrile group; a nitro group; a hydroxy group; a carbonyl group; an ester group; an imide group; an amino group; a phosphine oxide group; a alkoxy group; an aryloxy group; an alkylthioxy group; an arylthioxy group; an alkylsulfoxy group; an arylsulfoxy group; a silyl

group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of **N,** O and S atoms, or being unsubstituted or substituted with a substituent group to which two or more substituent groups of the above-exemplified substituent groups are linked. For example, "a substituent group in which two or more substituents are linked" may be a biphenylyl group. Namely, a biphenylyl group may be an aryl group, or it may be interpreted as a substituent group in which two phenyl groups are linked.

In the present disclosure, the carbon number of a carbonyl group is not particularly limited, but is preferably 1 to 40. Specifically, the carbonyl group may be a compound having the following structural formulas, but is not limited thereto.

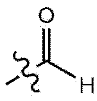
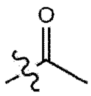
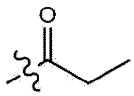
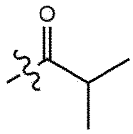

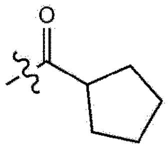
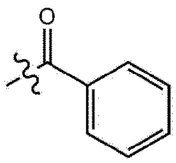
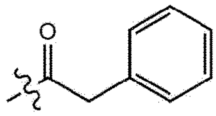

In the present disclosure, an ester group may have a structure in which oxygen of the ester group may be substituted by a straight-chain, branched-chain, or cyclic alkyl group having 1 to 25 carbon atoms, or an aryl group having 6 to 25 carbon atoms. Specifically, the ester group may be a compound having the following structural formulas, but is not limited thereto.

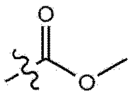
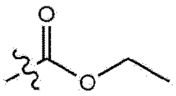
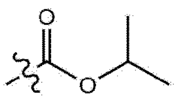
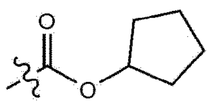
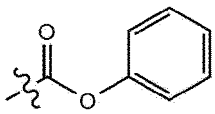

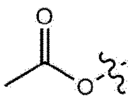
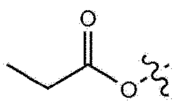
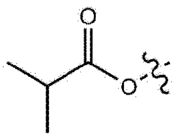
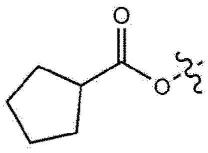
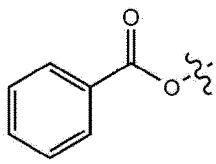

In the present disclosure, the carbon number of an imide group is not particularly limited, but is preferably 1 to 25. Specifically, the imide group may be a compound having the following structural formulas, but is not limited thereto.

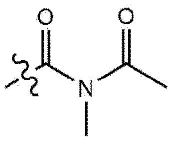
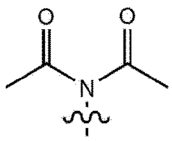
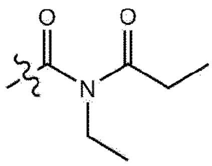

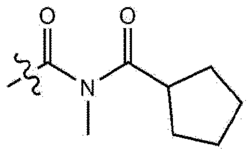
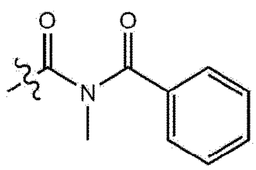

In the present disclosure, a silyl group specifically includes a trimethylsilyl group, a triethylsilyl group, a t-butyldimethylsilyl group, a vinyldimethylsilyl group, a propyldimethylsilyl group, a triphenylsilyl group, a diphenylsilyl group, a phenylsilyl group and the like, but are not limited thereto.

In the present disclosure, a boron group specifically includes a trimethylboron group, a triethylboron group, a t-butyldimethylboron group, a triphenylboron group, and a phenylboron group, but is not limited thereto.

In the present disclosure, examples of a halogen group include fluoro, chloro, bromo, or iodo.

In the present disclosure, the alkyl group may be straight-chain or branched-chain, and the carbon number thereof is not particularly limited, but is preferably 1 to 40. According to one embodiment, the carbon number of the alkyl group is 1 to 20. According to another embodiment, the carbon number of the alkyl group is 1 to 10. According to another embodiment, the carbon number of the alkyl group is 1 to 6. Specific examples of the alkyl group include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethylpropyl, isohexyl, 4-methylhexyl, 5-methylhexyl, and the like, but are not limited thereto.

In the present disclosure, the alkenyl group may be straight-chain or branched-chain, and the carbon number thereof is not particularly limited, but is preferably 2 to 40. According to one embodiment, the carbon number of the alkenyl group is 2 to 20. According to another embodiment, the carbon number of the alkenyl group is 2 to 10. According to still another embodiment, the carbon number of the alkenyl group is 2 to 6. Specific examples thereof include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl) vinyl-1-yl, a stilbenyl group, a styrenyl group, and the like, but are not limited thereto.

In the present disclosure, the cycloalkyl group is not particularly limited, but the carbon number thereof is preferably 3 to 60. According to another embodiment, the carbon number of the cycloalkyl group is 3 to 30. According to another embodiment, the carbon number of the cycloalkyl group is 3 to 20. According to another embodiment, the carbon number of the cycloalkyl group is 3 to 6. Specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, and the like, but are not limited thereto.

In the present disclosure, an aryl group is not particularly limited, but the carbon number thereof is preferably 6 to 60, and it may be a monocyclic aryl group or a polycyclic aryl group. According to one embodiment, the carbon number of the aryl group is 6 to 30. According to one embodiment, the carbon number of the aryl group is 6 to 20. The aryl group may be a phenyl group, a biphenyl group, a terphenyl group or the like as the monocyclic aryl group, but is not limited thereto. The polycyclic aryl group includes a naphthyl group, an anthracenyl group, a phenanthrenyl group, a pyrenyl group, a perylenyl group, a chrysenyl group, a fluorenyl group, or the like, but is not limited thereto.

In the present disclosure, the fluorenyl group may be substituted, and two substituent groups may be linked with each other to form a spiro structure. In the case where the fluorenyl group is substituted,

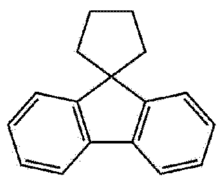 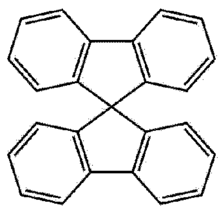 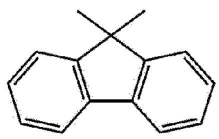 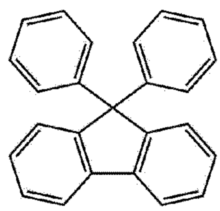

and the like can be formed. However, the structure is not limited thereto.

In the present disclosure, a heteroaryl group is a heteroaryl group containing one or more of O, N, Si and S as a heteroatom and also having aromaticity, and the carbon number thereof is not particularly limited, but is preferably 2 to 60. Examples of the heteroaryl group include a thiophene group, a furan group, a pyrrole group, an imidazole group, a thiazole group, an oxazol group, an oxadiazol group, a triazol group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyridopyrimidinyl group, a pyridopyrazinyl group, a pyrazinopyrazinyl group, an isoquinoline group, an indole group, a carbazole group, a benzoxazole group, a benzoimidazole group, a benzothiazol group, a benzocarbazole group, a benzothiophene group, a dibenzothiophene group, a benzofuranyl group, a phenanthroline group, a thiadiazolyl group, an isoxazolyl group, an oxadiazolyl group, a thiadiazolyl group, a benzothiazolyl group, a phenothiazinyl group, a dibenzofuranyl group, and the like, but are not limited thereto.

In the present disclosure, the aryl group in the aralkyl group, the aralkenyl group, the alkylaryl group and the arylamine group is the same as the examples of the aryl group as defined above. In the present disclosure, the alkyl group in the aralkyl group, the alkylaryl group and the alkylamine group is the same as the examples of the alkyl group as defined above. In the present disclosure, the heteroaryl in the heteroarylamine can apply to the description of the heteroaryl as defined above. In the present disclosure, the alkenyl group in the aralkenyl group is the same as the examples of the

alkenyl group as defined above. In the present disclosure, the description of the aryl group as defined above may be applied except that the arylene is a divalent group. In the present disclosure, the description of the heterocyclic group as defined above can be applied except that the heteroarylene is a divalent group. In the present disclosure, the description of the aryl group or cycloalkyl group as defined above can be applied except that the hydrocarbon ring is not a monovalent group but formed by combining two substituent groups. In the present disclosure, the description of the heterocyclic group as defined above can be applied, except that the heterocycle is not a monovalent group but formed by combining two substituent groups.

Further, unless otherwise stated herein, the weight average molecular weight of the first oligomer, second oligomer, poly(hydroxyalkanoate), poly(3-hydroxypropionic acid), etc. can be measured using a gel permeation chromatography(GPC). Specifically, the oligomer or copolymer is dissolved in chloroform to a concentration of 2 mg/ml, then 20 $\mu\ell$ of the solution is injected into GPC, and GPC analysis is carried out at 40°C. At this time, chloroform is used as the mobile phase for GPC, the flow rate is 1.0 mL/min, and the column used is two Agilent Mixed-B units connected in series. RI Detector is used as a detector. The values of Mw can be obtained using a calibration curve formed using a polystyrene standard sample. Nine kinds of the polystyrene standard samples are used with the weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

According to an embodiment of the present disclosure, there can be provided a poly(hydroxyalkanoate) comprising a repeating unit represented by the following Chemical Formula 1 and/or a repeating unit represented by the following Chemical Formula 2:

[Chemical Formula 1]

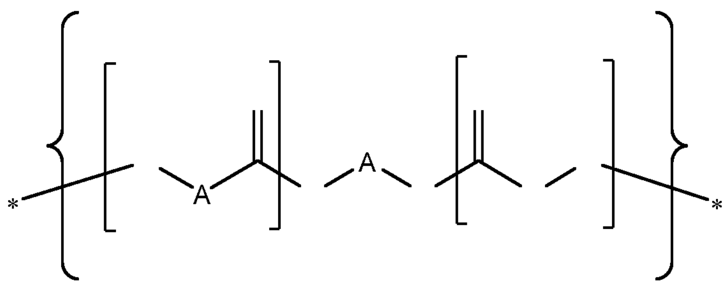

[Chemical Formula 2]

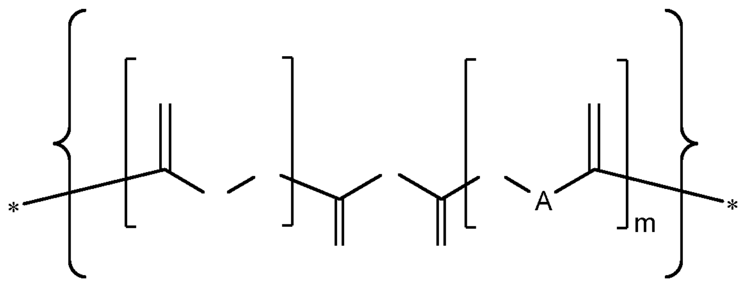

wherein in Chemical Formulas 1 and 2,

A, G, Q and R are each independently a substituted or unsubstituted alkylene having 1 to 10 carbon atoms,
X and Y are each independently a substituted or unsubstituted alkylene having 1 to 20 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O and S,
p, q, m and n are each independently an integer of 0 to 200,
p + q is 1 or more, and
n + m is 1 or more.

In Chemical Formulas 1 and 2, A, G, Q and R may each be the same or different, and may be, for example, an unsubstituted alkylene having 2 to 5 carbon atoms or an alkylene substituted with an alkyl group having 2 to 5 carbon atoms.

For example, the A, G, Q and R may each independently be ethylene, propylene, butylene, pentylene, methyl-substituted ethylene, methyl-substituted propylene, methyl-substituted butylene, methyl-substituted pentylene, ethyl-substituted ethylene, ethyl-substituted propylene, ethyl-substituted butylene or ethyl-substituted pentylene.

Further, the poly(hydroxyalkanoate) may be a polymer in which 3-hydroxypropionic acid, which is an eco-friendly monomer derived from bio, is polymerized, and in this case, A, G, Q, and R may be ethylene. The poly(3-hydroxypropionate) polymerized with the 3-hydroxypropionic acid includes a repeating unit represented by the above Chemical Formula 1 and/or a repeating unit represented by the following Chemical Formula 2, and thus has the properties of realizing a high molecular weight while reducing the ratio of end groups.

In Chemical Formulas 1 and 2, X and Y may each be the same or different, and for example, X and Y may be a substituted or unsubstituted alkylene having 1 to 10 carbon atoms or a substituted or unsubstituted arylene having 6 to 20 carbon atoms.

Further, the X and Y may each independently an unsubstituted ethylene having 2 to 7 carbon atoms; an alkylene substituted with an alkyl group having 2 to 5 carbon atoms; an unsubstituted arylene having 6 to 20 carbon atoms; or an arylene having 6 to 20 carbon atoms substituted with an alkyl group having 2 to 5 carbon atoms. For example, the X and Y may each independently be ethylene, propylene, butylene, pentylene, hexylene, heptylene, phenylene, biphenylene, triphenylene, naphthalene, anthracenylene, or the like.

In Chemical Formulas 1 and 2, p, q, n, and m may each be the same or different, and for example, p, q, n, and m may be each independently 0 to 200, 1 to 200, 2 to 180, 3 to 150, 5 to 120, 10 to 100, 15 to 80, or 20 to 60.

Further, p + q may be 1 or more, and n + m may be 1 or more.

Meanwhile, in Chemical Formulas 1 and 2, * means a bonding point.

Conventionally, there was a problem that due to problems such as the formation of by-products in the process of preparing poly(hydroxyalkanoate) such as poly(3-hydroxypropionic acid), it was difficult to realize a high molecular weight, and due to the inclusion of fermentation residues in the polymerization process of hydroxyalkanoates such as 3-hydroxypropionic acid, which is produced in the bioprocess, the polymer contains a large amount of organic nitrogen, which results in a high yellow index(YI).

However, the poly(hydroxyalkanoate) according to one embodiment may include the repeating unit represented by Chemical Formula 1, or may include the repeating unit represented by Chemical Formula 2, or may include both the repeating unit represented by Chemical Formula 1 and the repeating unit represented by Chemical Formula 2, thereby reducing the yellow index(YI) value and nitrogen content as well as realizing a high molecular weight.

Further, when the poly(hydroxyalkanoate) contains only the repeating unit represented by Chemical Formula 1, the degree of polymerization of the repeating unit represented by Chemical Formula 1 may be 20 to 3000, 50 to 2000, 100 to 1800, 180 to 1700, or 300 to 1500.

Further, when the poly(hydroxyalkanoate) contains only the repeating unit represented by Chemical Formula 2, the degree of polymerization of the repeating unit represented by Chemical Formula 2 may be 20 to 3000, 50 to 2000, 100 to 1800, 180 to 1700, or 300 to 1500.

Further, when the poly(hydroxyalkanoate) contains both the repeating unit represented by Chemical Formula 1 and the repeating unit represented by Chemical Formula 2, the degree of polymerization of each repeating unit may be 1 to 1000, 10 to 900, 50 to 800, 80 to 700, or 100 to 500, and the ratio between the degree of polymerization of the repeating unit represented by Chemical Formula 1 and the degree of polymerization of the repeating unit represented by Chemical Formula 2 may be 1:0.01 to 100, 1:0.1 to 50, 1:0.2 to 20, 1:0.3 to 10, 1:0.5 to 5, 1:1 to 3.

Further, poly(hydroxyalkanoate) may have a hydroxyl group, a carboxyl group, a vinyl group, etc. as end groups, but conventionally, vinyl groups are generated at the ends due to a side reaction in the polymerization process of hydroxyalkanoate such as 3-hydroxypropionic acid, wherein the vinyl group acts as a factor that breaks the equivalent ratio in condensation polymerization, where the equivalent ratio of each functional group (hydroxyl group, carboxyl group) is important, thereby inhibiting the reaction rate and making it difficult to obtain a polymer with a high molecular weight. However, since the poly(hydroxyalkanoate) according to one embodiment is prepared by the preparation process described below, it may contain a small number of vinyl groups at the ends while including the repeating units of Chemical Formulas 1 and/or 2.

For example, the poly(hydroxyalkanoate) may have a ratio of a vinyl group in the end groups of 20 mol% or less, 19 mol% or less, 18 mol% or less, 17 mol% or less, 16 mol% or less, or 15 mol% or less. Further, the poly(hydroxyalkanoate) is more excellent as the ratio of a vinyl group in the end groups is lower. As an example, the ratio of a vinyl group in the end groups may be 0.1 mol% or more, 0.2 mol% or more, 0.3 mol% or more, 0.4 mol% or more, or 0.5 mol% or more.

Further, the poly(hydroxyalkanoate) may include a hydroxyl end group and/or a carboxyl end group. For example, the poly(hydroxyalkanoate) may include at least one hydroxyl end group selected from the end groups represented by the following Chemical Formulas 3 to 5.

[Chemical Formula 3]

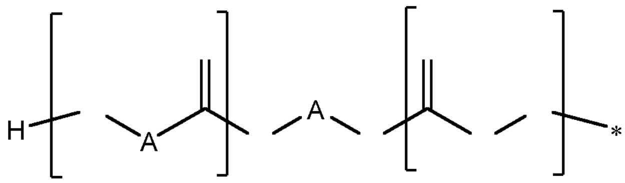

[Chemical Formula 4]

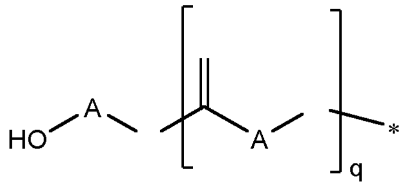

[Chemical Formula 5]

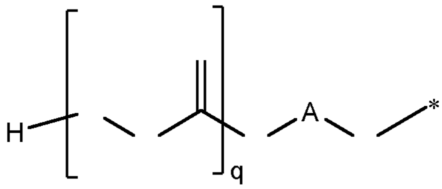

wherein in Chemical Formulas 3 to 5,
A, G, X, p and q are as described above.

The ratio of the hydroxyl end group at total ends of the poly(hydroxyalkanoate) may be 50% to 99%, for example, 55% to 95%, 60% to 90%, 65% to 85%, or 70% to 80%.

Further, the poly(hydroxyalkanoate) may include at least one carboxyl end group selected from the end groups represented by the following Chemical Formulae 6 to 8:

[Chemical Formula 6]

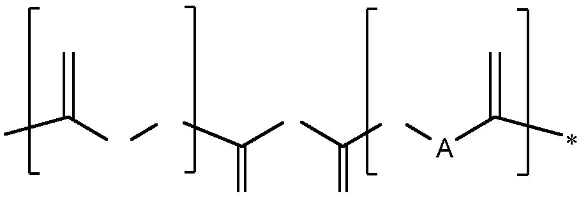

[Chemical Formula 7]

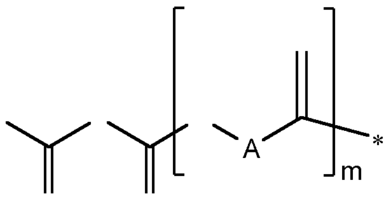

[Chemical Formula 8]

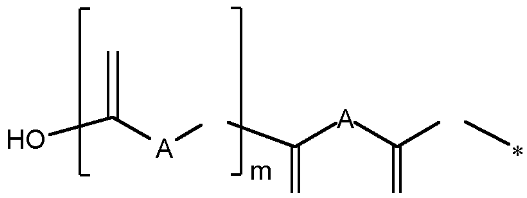

wherein in Chemical Formulas 6 to 8,
Q, R, Y, n and m are as described above.

The ratio of the carboxyl end group at total ends of the poly(hydroxyalkanoate) may be 50% to 99%, for example, 55% to 95%, 60% to 90%, 65% to 85%, or 70% to 80%.

In addition, the poly(hydroxyalkanoate) may further comprise a repeating unit represented by the following Chemical Formula 9:

[Chemical Formula 9]

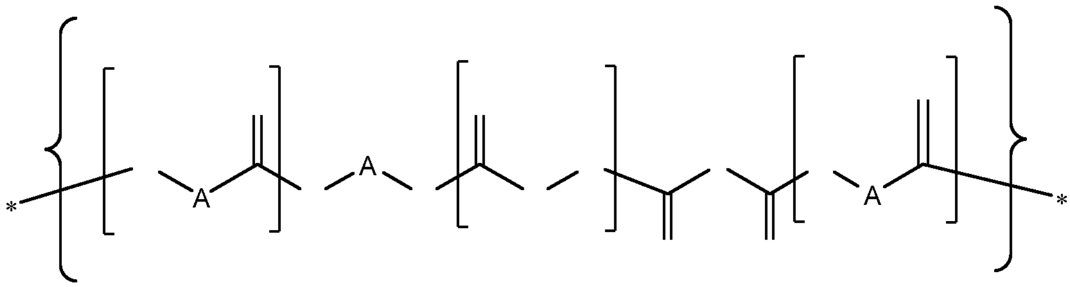

wherein in Chemical Formula 9,

A, G, R, X, and Y are as described above.
b, c, and d may be each independently an integer of 1 to 200, for example, 3 to 150, 5 to 120, 10 to 100, 15 to 80, or 20 to 60.

The degree of polymerization of the repeating unit represented by Chemical Formula 9 in the poly(hydroxyalkanoate) may be 1 to 1000, 10 to 900, 50 to 800, 80 to 700, or 100 to 500.

Further, the ratio between the degree of polymerization of the repeating unit represented by Chemical Formula 1 and the degree of polymerization of the repeating unit represented by Chemical Formula 9 may be 1:0.05 to 10, 1:0.1 to 8, 1:0.2 to 5, or 1:0.3 to 1.

Further, the ratio between the degree of polymerization of the repeating unit represented by Chemical formula 2 and the degree of polymerization of the repeating unit represented by Chemical Formula 9 may be 1:0.05 to 10, 1:0.1 to 8, 1:0.2 to 5, or 1:0.3 to 1.

Further, the poly(hydroxyalkanoate) may have a yellow index(YI) value of 30 or less and a nitrogen content of 30 ppm or less.

For example, the poly(hydroxyalkanoate) may have a yellow index(YI) value of 30 or less, 28 or less, 26 or less, 23 or less, 20 or less, 15 or less, or 14 or less. Further, the poly(hydroxyalkanoate) is more excellent as the yellow index value is lower, and for example, the yellow index value may be 0.1 or more, 0.2 or more, 0.3 or more, 0.4 or more, or 0.5 or more.

Further, the poly(hydroxyalkanoate) may have a nitrogen content of 60 ppm or less, 55 ppm or less, 50 ppm or less, or 45 ppm or less. Further, the poly(hydroxyalkanoate) is more excellent as the nitrogen content is lower, and for example, the nitrogen content may be 0.1 ppm or more, 0.2 ppm or more, 0.3 ppm or more, 0.4 ppm or more, or 0.5 ppm or more.

Further, the poly(hydroxyalkanoate) may have an acid value (acidity) of 10 meq/kg or more and 300 meq/kg or less. For example, the poly(hydroxyalkanoate) may have an acid value of 20 meq/kg or more and 250 meq/kg or less, 30 meq/kg or more and 200 meq/kg or less, 40 meq/kg or more and 180 meq/kg or less, 50 meq/kg or more and 160 meq/kg or less, or 60 meq/kg or more and 150 meq/kg or less.

Further, the poly(hydroxyalkanoate) may have a bio content of 90% or more, 92% or more, 95% or more, 98% or

more, or 100%.

Further, the weight average molecular weight of the poly(hydroxyalkanoate) may be 15,000 to 200,000. Preferably, the weight average molecular weight of the poly(hydroxyalkanoate) may be 16,000 or more, 17,000 or more, 18,000 or more, 19,000 or more, or 20,000 or more, and 150,000 or less, 100,000 or less, 90,000 or less, 80,000 or less, 70,000 or less, 69,000 or less, 68,000 or less, 67,000 or less, 66,000 or less, 65,000 or less, 64,000 or less, 63,000 or less, 62,000 or less, 61,000 or less, or 60,000 or less.

Further, the number average molecular weight of the poly(hydroxyalkanoate) may be 10,000 to 100,000. Preferably, the number average molecular weight of the poly(hydroxyalkanoate) may be 11,000 or more, 12,000 or more, 13,000 or more, 14,000 or more, or 15,000 or more, and 90,000 or less, 80,000 or less, 70,000 or less, 60,000 or less, 50,000 or less, 40,000 or less, or 30,000 or less.

Further, the molecular weight distribution(Mw/Mn) of the poly(hydroxyalkanoate) may be 1.5 to 3.5. Preferably, the molecular weight distribution of the poly(hydroxyalkanoate) may be 1.6 or more, 1.7 or more, 1.8 or more, 1.9 or more, or 2.0 or more, and 3.4 or less, 3.3 or less, 3.2 or less, 3.1 or less, or 3.0 or less.

According to the other embodiment, there is provided a method for preparing a poly(hydroxyalkanoate), comprising:

(step 1) subjecting a hydroxyalkanoic acid to polymerization reaction in the presence of a compound having two or more hydroxyl groups to prepare a first oligomer;
(step 2) subjecting a hydroxyalkanoic acid to polymerization reaction in the presence of a compound having two or more carboxyl groups to prepare a second oligomer; and
(step 3) subjecting the first oligomer and the second oligomer to polymerization reaction to prepare a poly(hydroxyalkanoate).

The hydroxyalkanoic acid may be, but is not limited to, 3-hydroxypropionic acid, 4-hydroxybutanoic acid, 5-hydroxypentanoic acid, or 6-hydroxyhexanoic acid, and may be 3-hydroxypropionic acid to produce poly(hydroxyalkanoate) with a high bio carbon content, and in particular, may be bio-derived 3-hydroxypropionic acid produced by a bioprocess.

In the method for preparing a poly(hydroxyalkanoate) according to the other embodiment, poly(hydroxyalkanoate) is prepared through steps 1 to 3, thereby providing poly(hydroxyalkanoate) having a low vinyl group ratio in the end groups, and a low yellow index(YI) value and nitrogen content as well as having a high molecular weight.

The step 1 is a step of subjecting a hydroxyalkanoic acid to polymerization reaction in the presence of a compound having two or more hydroxyl groups to prepare a first oligomer. The polymerization reaction may be a melt polymerization reaction, and the melt polymerization means that the hydroxyalkanoic acid as a reactant and the hydroxyalkanoic acid oligomer as a product remain a liquid state. Further, the first oligomer prepared by subjecting the hydroxyalkanoic acid to polymerization reaction in the presence of the compound having two or more hydroxyl groups may be represented by the following Chemical Formula 10.

[Chemical Formula 10]

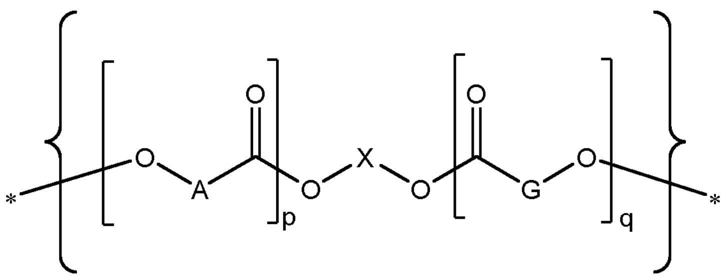

wherein in Chemical Formula 10,

A, G, X, p and q are as described above.

Further, the first oligomer prepared in the step 1 may have a weight average molecular weight of 1,000 or more and 20,000 or less. Preferably, the weight average molecular weight of the first oligomer may be 1,500 or more, 2,000 or more, 2,500 or more, or 3,000 or more, and 15,000 or less, 10,000 or less, 9,000 or less, 8,000 or less, or 70,000 or less.

The compound having two or more hydroxyl groups may be represented by the following Chemical Formula 12.

[Chemical formula 12] OH- -OH

wherein in Chemical Formula 12,
X is as described above.

Further, the compound having two or more hydroxyl groups may be 1,3-propanediol, 1,4-butanediol, 1,5-pentanediol, 1,6-hexanediol, catechol, hydroquinone, resorcinol, etc.

The compound having 2 or more hydroxyl groups may be used in an amount of 0.1 parts by weight or more and 20.0 parts by weight or less, 0.5 parts by weight or more and 10.0 parts by weight or less, 1.0 parts by weight or more and 8.0 parts by weight or less, or 1.5 parts by weight or more and 5.0 parts by weight or less based on 100 parts by weight of the hydroxyalkanoic acid. If the compound having 2 or more hydroxyl groups is used in an excessively small amount, it becomes impossible to adjust the reaction conditions by adjusting the charging ratio, and if the compound having 2 or more hydroxyl groups is used in an excessive large amount, there is a problem that the ratio of a hydroxyalkanoic acid in the final polymerized poly(hydroxyalkanoate) polymer becomes too small, which results in deterioration of the physical properties.

The step 1 can be carried out at a temperature of 50°C or more and 150°C or less under a pressure of 1 torr or more and 200 torr or less. For example, the reaction temperature of the step 1 may be 60°C or more, 70°C or more, 80°C or more, 85°C or more, or 90°C or more, and 140°C or less, 130°C or less, 120°C or less, 110°C or less, or 100°C or less. Further, the step 1 may be carried out under a pressure of 2 torr or more, 5 torr or more, 10 torr or more, or 15 torr or more, and 150 torr or less, 130 torr or less, 110 torr or less, 100 torr or less, or 80 torr or less. Further, the reaction time of the step 1 can be appropriately determined in consideration of the molecular weight, yield, etc. of the first oligomer produced, and preferably, the reaction is carried out for 1 hour to 10 hours, 2 hours to 8 hours, or 3 hours to 5 hours.

Further, the step 1 may be carried out in the presence of a sulfonic acid catalyst. The sulfonic acid catalyst is, for example, p-toluenesulfonic acid, m-xylene-4-sulfonic acid, 2-mesitylenesulfonic acid, or p-xylene-2-sulfonic acid. The catalyst may be used in an amount of 0.1 to 0.5 mol% or 0.2 to 0.4 mol% relative to the hydroxyalkanoic acid.

Further, the step 1 may further include a step of drying the hydroxyalkanoic acid before the polymerization reaction. For example, the drying temperature may be 50°C or more, 60°C or more, 70°C or more, 80°C or more, or 90°C or more, and 150°C or less, 140°C or less, 130°C or less, 120°C or less, or 110°C or less. Further, the drying may be carried out under a pressure of 10 torr or more, 20 torr or more, 30 torr or more, or 40 torr or more, and 760 torr or less, 500 torr or less, 400 torr or less, 300 torr or less, or 200 torr or less.

The step 2 is a step of subjecting a hydroxyalkanoic acid to polymerization reaction in the presence of a compound having two or more carboxyl groups to prepare a second oligomer. The polymerization reaction may be a melt polymerization reaction. Further, the second oligomer prepared by subjecting the hydroxyalkanoic acid to polymerization reaction in the presence of the compound having two or more carboxyl groups may be represented by the following Chemical Formula 11.

[Chemical Formula 11]

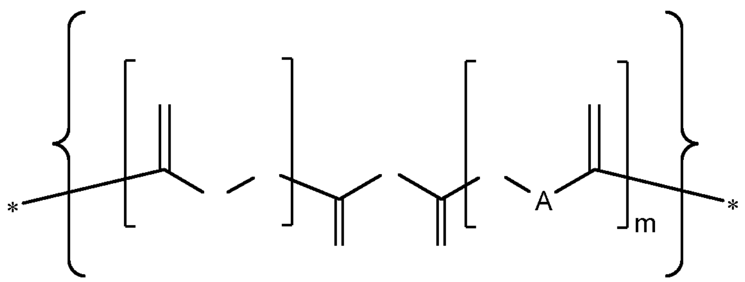

wherein in Chemical Formula 5,
Q, R, Y, n, and m are as described above.

Further, the second oligomer prepared in the step 2 may have a weight average molecular weight of 1,000 or more and 20,000 or less. Preferably, the weight average molecular weight of the second oligomer may be 1,500 or more, 2,000 or more, 2,500 or more, or 3,000 or more, and 15,000 or less, 10,000 or less, 9,000 or less, 8,000 or less, or 70,000 or less.

The compound having two or more carboxyl groups may be represented by the following Chemical Formula 13.

[Chemical Formula 13] - -

wherein in Chemical Formula 13,
Y is as described above.

Further, the compound having two or more carboxyl groups may be succinic acid, adipic acid, isophthalic acid,

terephthalic acid, etc.

The compound having two or more carboxyl groups may be used in an amount of 0.1 parts by weight or more and 20.0 parts by weight or less, 0.5 parts by weight or more and 10.0 parts by weight or less, 1.0 part by weight or more and 8.0 parts by weight or less, or 1.3 parts by weight or more and 5.0 parts by weight or less, based on 100 parts by weight of the hydroxyalkanoic acid. If the compound having two or more carboxyl groups is used in an excessively small amount, it becomes impossible to adjust the reaction conditions by adjusting the charging ratio, and if the compound having 2 or more carboxyl groups is used in an excessive large amount, there is a problem that the ratio of a hydroxyalkanoic acid in the final polymerized poly(hydroxyalkanoate) polymer becomes too small, which results in deterioration of the physical properties.

The step 2 can be carried out at a temperature of 50°C or more and 150°C or less under a pressure of 1 torr or more and 200 torr or less. For example, the reaction temperature of the step 2 can be 60°C or more, 70°C or more, 80°C or more, 85°C or more, or 90°C or more, and 140°C or less, 130°C or less, 120°C or less, 110°C or less, or 100°C or less. Further, the step 2 can be carried out under a pressure of 2 torr or more, 5 torr or more, 10 torr or more, or 15 torr or more, and 150 torr or less, 130 torr or less, 110 torr or less, 100 torr or less, or 80 torr or less. Further, the reaction time of the step 2 may be appropriately determined in consideration of the molecular weight, yield, etc. of the second oligomer produced, and preferably, the reaction is carried out for 1 to 10 hours, 2 to 8 hours, or 3 to 5 hours.

Further, the step 2 may be carried out in the presence of a sulfonic acid based catalyst. The sulfonic acid based catalyst is, for example, p-toluenesulfonic acid, m-xylene-4-sulfonic acid, 2-mesitylenesulfonic acid, or p-xylene-2-sulfonic acid. The catalyst may be used in an amount of 0.1 to 0.5 mol%, or 0.2 to 0.4 mol% relative to 3-hydroxypropionic acid.

Further, the step 2 may further include a step of drying the hydroxyalkanoic acid before the polymerization reaction. For example, the drying temperature may be 50°C or more, 60°C or more, 70°C or more, 80°C or more, or 90°C or more, and 150°C or less, 140°C or less, 130°C or less, 120°C or less, or 110°C or less. Further, the drying may be carried out under a pressure of 10 torr or more, 20 torr or more, 30 torr or more, or 40 torr or more, and 760 torr or less, 500 torr or less, 400 torr or less, 300 torr or less, or 200 torr or less.

The step 3 is a step of subjecting the first oligomer and the second oligomer to polymerization reaction to prepare a poly(hydroxyalkanoate). The poly(hydroxyalkanoate) according to one embodiment can be prepared by the step 3.

In the step 3, the first oligomer may be used in an amount of 0.1 times or more and 10 times or less, 0.2 times or more and 5 times or less, or 0.3 times or more and 3 times or less that of the second oligomer. If the first oligomer is used in an excessively small amount or an excessively large amount relative to the second oligomer, there is a problem that the balance of functional groups is not achieved, and a poly(3-hydroxypropionic acid) with a high molecular weight cannot be obtained.

The step 3 may be carried out at a temperature of 70°C or more and 150°C or less. The reaction temperature of the step 3 may be 75°C or more, 80°C or more, 85°C or more, 90°C or more, or 95°C or more, and 140°C or less, 130°C or less, 120°C or less, 110°C or less, or 100°C or less. Further, the pressure of the step 3 may be 5 mbar or less, 4 mbar or less, 3 mbar or less, 2 mbar or less, 1 mbar or less, 0.5 mbar or less, 0.4 mbar or less, or 0.3 mbar or less, and 0.01 mbar or more, 0.02 mbar or more, 0.03 mbar or more, 0.04 mbar or more, 0.05 mbar or more, 0.06 mbar or more, 0.07 mbar or more, 0.08 mbar or more, 0.09 mbar or more, or 0.1 mbar or more. The reaction time of the step 3 may be appropriately determined in consideration of the molecular weight, yield, etc. of the polymer produced, and preferably, the reaction is carried out for 1 hour to 60 hours, 5 hours to 50 hours, 10 hours to 40 hours, or 15 hours to 30 hours.

Meanwhile, since the step 3 is carried out after the step 1 and step 2, the catalyst added to each of the steps 1 and 2 can participate in the reaction even in the step 3.

## ADVANTAGEOUS EFFECTS

As described above, according to the present invention, a poly(hydroxyalkanoate) is prepared by subjecting a hydroxyalkanoic acid to condensation polymerization under specific conditions, thereby making it possible to prepare a poly(hydroxyalkanoate) having a low vinyl group ratio in the end groups, and a low yellow index(YI) value and nitrogen content as well as having a high molecular weight.

## DETAILED DESCRIPTION OF THE EMBODIMENTS

Hereinafter, embodiments of the present disclosure will be explained in detail with reference to examples. However, the following examples are for illustrative purposes only, and the detailed description of the present disclosure is not limited by these examples.

### Example 1

### (1) Preparation of the first oligomer

60 g of 3-hydroxypropionic acid and 2.5 g of 1,3-propanediol were charged into an oil bath reactor A, and then p-toluenesulfonic acid (p-TSA) catalyst (0.4 mol% based on 3-hydroxypropionic acid) was charged into the oil bath reactor A, and polymerization reaction was carried out at 90°C and 10 torr for 2 hours, and then at 0.2 torr for 2 hours. After the reaction was completed, the reactant was dissolved in chloroform and extracted with methanol to obtain the first oligomer (weight average molecular weight: 3,000 g/mol).

### (2) Preparation of the second oligomer

60 g of 3-hydroxypropionic acid and 0.8 g of succinic acid were charged into an oil bath reactor B, and then a p-toluenesulfonic acid (p-TSA) catalyst (0.4 mol% based on 3-hydroxypropionic acid) was charged into the oil bath reactor B, and polymerization reaction was carried out at 90°C and 10 torr for 2 hours, and then at 0.2 torr for 2 hours. After the reaction was completed, the reactant was dissolved in chloroform and extracted with methanol to obtain a second oligomer (weight average molecular weight: 7,000 g/mol).

### (3) Preparation of poly(3-hydroxypropionic acid)

6 g of the first oligomer and 16 g of the second oligomer were charged into the oil bath reactor C, and polymerization reaction was carried out at 110°C and 0.2 torr for 24 hours. After the reaction was completed, the reactant was dissolved in chloroform and extracted with methanol to obtain poly(3-hydroxypropionic acid).

### Example 2

(1) Poly(3-hydroxypropionic acid) was prepared in the same manner as in Example 1, except that 60 g of 3-hydroxypropionic acid and 1.0 g of 1,3-propanediol were charged into the oil bath reactor A during the preparation of the first oligomer.

### Example 3

(3) Poly(3-hydroxypropionic acid) was prepared in the same manner as in Example 1, except that 10 g of the first oligomer and 18 g of the second oligomer were charged into the oil bath reactor C during the preparation of poly(3-hydroxypropionic acid).

### Example 4

(3) Poly(3-hydroxypropionic acid) was prepared in the same manner as in Example 2, except that 12 g of the first oligomer and 14 g of the second oligomer were charged into the oil bath reactor C.

### Example 5

60 g of 3-hydroxypropionic acid and 2.5 g of 1,3-propanediol were charged into an oil bath reactor A, and then p-toluenesulfonic acid (p-TSA) catalyst (0.4 mol% based on 3-hydroxypropionic acid) was charged into the oil bath reactor A, and polymerization reaction was carried out at 90°C and 10 torr for 2 hours, and then at 0.2 torr for 2 hours. After the reaction was completed, the reactant was dissolved in chloroform and extracted with methanol to obtain the first oligomer (weight average molecular weight: 3,000 g/mol). 20 g of the first oligomer was subjected to polymerization reaction at 110°C and 0.2 torr for 24 hours. After the reaction was completed, the reactant was dissolved in chloroform and extracted with methanol to obtain poly(3-hydroxypropionic acid).

### Comparative Example 1

β-Propiolactone (19.4 ml) was added to a reactor, and then acrylic acid (10 uL, 0.05 mol%) and $Sn(Oct)_2$ (9 uL, 0.01 mol%) were added thereto, and the mixture was reacted at 100°C for 1 hour to produce a polymer.

**Comparative Example 2**

A polymer was prepared with reference to Korean Unexamined Patent Publication No. 10-2021-0037448. Specifically, the culture medium used was MR (Modified Riesenberg) medium supplemented with ampicillin at a concentration of 0.2 g/L. Specifically, a 5L fermenter (internal volume: 3L) was used, and the microorganism for fermentation used was the recombinant *E. coli,* which was produced by transforming XL1-Blue *E. coli* with a recombinant vector in which the RecC gene, which is a polyhydroxyalkanoate synthase (PHA synthase) derived from *Ralstonia eutropha,* and the mutant 540 (CPPCT_540) gene of propionyl-CoA transferase derived from *Clostridium propionicum,* were cloned into the pBLuescript II KS+ vector. The CPPCT_540 gene is an improved gene in which the base sequence was substituted so that valine, i.e., the 193rd amino acid, was expressed into alanine (V194A), and three silent mutations (T669C, A1125G, T1158C) having only DNA substitution were carried out without change of amino acids (WO 09/022797). Throughout the fermentation process, a feeding solution containing antibiotics and 700 g/L glucose was continuously added to the MR medium, and poly(3-hydroxypropionic acid) was produced by fermentation.

**Comparative Example 3**

3-Hydroxypropionic acid (60 g) from which moisture was removed was placed in a reactor, and p-TSA (p-Toluenesulfonic acid) as a catalyst was added at 0.2 mol% relative to 3-hydroxypropionic acid, and tin(II) chloride ($SnCl_2$) was added at 0.1 mol% relative to 3-hydroxypropionic acid. The temperature and pressure inside the reactor were maintained at 90°C and 10 torr, respectively, and the reaction was carried out for 2 hours to prepare a 3-hydroxypropionic acid oligomer.

The temperature and pressure inside the reactor were then adjusted to 110°C and 0.2 torr, respectively, and the reaction was carried out for 8 hours to prepare poly(3-hydroxypropionate).

**Comparative Example 4**

3-Hydroxypropionic acid (60 g) from which moisture was removed was placed in a reactor, and p-TSA (p-Toluenesulfonic acid) as a catalyst was added at 0.4 mol% relative to 3-hydroxypropionic acid, and tin(II) chloride ($SnCl_2$) was added at 0.2 mol% relative to 3-hydroxypropionic acid. The temperature and pressure inside the reactor were maintained at 90°C and 10 torr, respectively, and the reaction was carried out for 2 hours to prepare a 3-hydroxypropionic acid oligomer.

The temperature and pressure inside the reactor were then adjusted to 110°C and 0.2 torr, respectively, and the reaction was carried out for 8 hours to prepare poly(3-hydroxypropionate).

**Experimental Example**

The physical properties of the polymers prepared in Examples and Comparative Examples were evaluated by the following method, and the results are shown in Table 1 below.

**1. Weight average molecular weight, number average molecular weight, and molecular weight distribution**

The weight average molecular weight, number average molecular weight and polydispersity index of the polymer in each step prepared in Examples and Comparative Examples were measured by a gel permeation chromatography (GPC, Waters Alliance e2695).

- Solvent: chloroform (eluent)
- Flow rate: 1.0 ml/min
- Column temperature: 40°C
- Standard: Polystyrene

**2. Analysis of vinyl group in end groups**

The ratio of a vinyl group in total end group was calculated through 1H-NMR measurement using Buker 500MHz NMR model equipment. Specifically, each polymer was dissolved in d-$CDCl_3$ at a concentration of 8 mg/ml and measured, and calculated according to the following Mathematical Equation 1.

[Mathematical Equation 1]

$$vinyl\ group(\%) = \frac{2a}{(2a+b)} \times 100$$

in Mathematical Equation 1,

a is the area value of $^{1}H$ in C=C of 6.3 ppm,
b is the area value of $^{2}H$ in $HO-CH_2-$ of 3.8 ppm.

**3. Analysis of yield**

The yield of the polymers prepared in Examples and Comparative Examples was calculated according to the following Mathematical Formula 2. Meanwhile, the yield of Comparative Example 2 refers to the ratio of poly(3-hydroxypropionic acid) contained in the cell.

{Content of the finally prepared polymer(g)/Content of 3-hydroxypropionic acid used as a reactant (g)} * 100 [Mathematical Equation 2]

**4. Analysis of bio content**

The bio content of the polymers prepared in Examples and Comparative Examples was analyzed by ASTM 6866-22. Specifically, the sample was graphitized for analysis by an accelerator mass spectrometer(AMS), and then the content of radioisotope $^{14}C$ (bio-derived) was analyzed by ASTM 6866-22.

**5. Analysis of yellow index**

The yellow index(YI) of the polymers prepared in Examples and Comparative Examples was measured by a colorimeter available from NIPPON DENSHOKU.

- Type of light source: D65
- Viewing angle: 10 °

**6. Analysis of nitrogen content**

For the polymers prepared in Examples and Comparative Examples, 10 mg of sample was injected using NSX N-Quant equipment, and the content of total nitrogen (N) was analyzed by combustion at a temperature of 800 °C.

**7. Analysis of polymer acid value**

The polymers prepared in Examples and Comparative Examples were titrated with a 0.02 N potassium methoxide solution as a titration solution using a DGi 116-solvent electrode on a Mettler Toledo T5 equipment to analyze the titration point.

[Table 1]

| | Mn | Mw | PDI | Vinyl group content (%) | Yield (%) | Bio content (%) | Yellow index (YI) | Nitrogen( N) content (ppm) | Acid value (meq/kg ) |
|---|---|---|---|---|---|---|---|---|---|
| Example 1 | 14200 | 26600 | 1.9 | 13 | 88 | 100 | 11.5 | 43 | 148.6 |
| Example 2 | 16700 | 32600 | 2.0 | 15 | 85 | 100 | 13.4 | 40 | 140.9 |
| Example 3 | 14900 | 29900 | 2.0 | 17 | 88 | 100 | 11.1 | 45 | 143.4 |
| Example 4 | 17600 | 37700 | 2.2 | 19 | 82 | 100 | 12.5 | 40 | 112.8 |

(continued)

| | Mn | Mw | PDI | Vinyl group content (%) | Yield (%) | Bio content (%) | Yellow index (YI) | Nitrogen( N) content (ppm) | Acid value (meq/kg ) |
|---|---|---|---|---|---|---|---|---|---|
| Example 5 | 2700 | 6300 | 2.3 | 8 | 78 | 100 | 10.8 | 41 | 39 |
| Compara tive Example 1 | 27500 | 49000 | 1.78 | 44 | 87 | 0 | 11.8 | 40 | 103.4 |
| Compara tive Example 2 | - | - | - | N.D | 17 | 100 | 29.73 | 5660 | 68.1 |
| Compara tive Example 3 | 7000 | 10900 | 1.6 | 33 | 83 | 100 | 13.0 | 45 | 280.6 |
| Compara tive Example 4 | 14800 | 25800 | 1.7 | 62 | 83 | 100 | 11.1 | 43 | 156.1 |

Referring to Table 1, it was confirmed that Examples 1 to 4 had low vinyl group content of 19% or less, and low yellow index, nitrogen content, and acid value as well as showing high molecular weight and yield. On the other hand, Example 5 had a high yield, a low vinyl group content, a low yellow index, nitrogen content and acid value, but did not include the process of step 2 of polymerizing 3-hydroxypropionic acid in the presence of dicarboxylic acid, and thus had low molecular weight compared to Examples 1 to 4.

On the other hand, it was confirmed that Comparative Example 1, in which poly(3-hydroxypropionic acid) was prepared using β-propiolactone, had high vinyl group content and did not contain a bio carbon. It was also confirmed that Comparative Example 2, in which poly(3-hydroxypropionic acid) was prepared by a fermentation process, had the problems that the yield was low and the yellow index and nitrogen content were high. Furthermore, it was confirmed that Comparative Examples 3 and 4 had lower molecular weights and higher vinyl group content and acid value compared to Examples.

**Claims**

1. A poly(hydroxyalkanoate) comprising a repeating unit represented by the following Chemical Formula 1 and/or a repeating unit represented by the following Chemical Formula 2:

[Chemical Formula 1]

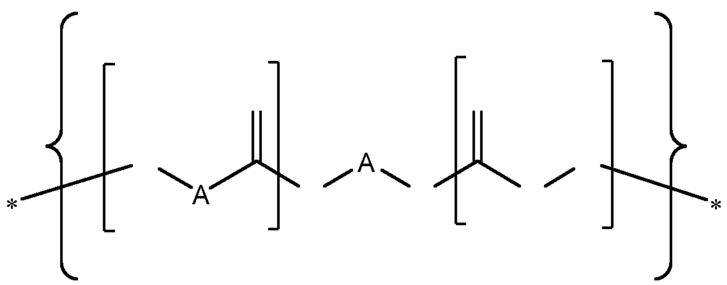

[Chemical Formula 2]

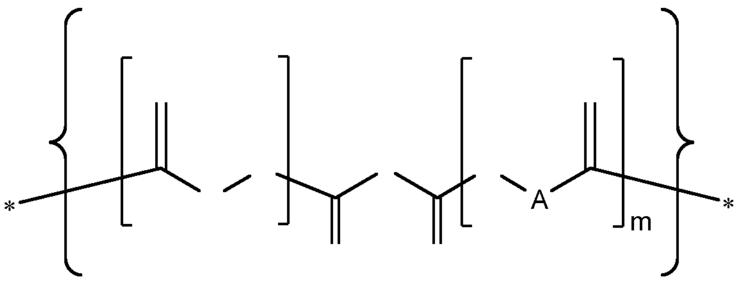

wherein in Chemical Formulas 1 and 2,

A, G, Q and R are each independently a substituted or unsubstituted alkylene having 1 to 10 carbon atoms,
X and Y are each independently a substituted or unsubstituted alkylene having 1 to 20 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O and S,
p, q, m and n are each independently an integer of 0 to 200,
p + q is 1 or more, and
n + m is 1 or more.

**2.** The poly(hydroxyalkanoate) according to claim 1,

wherein the poly(hydroxyalkanoate) has at least one hydroxyl end group selected from the end groups represented by the following Chemical Formulae 3 to 5:

[Chemical Formula 3]

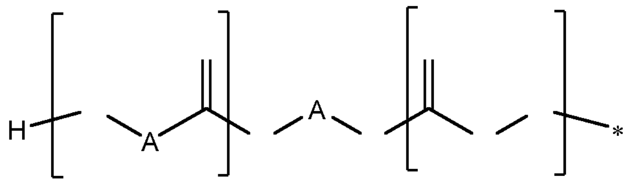

[Chemical Formula 4]

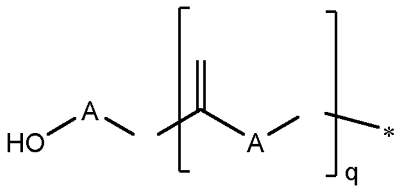

[Chemical Formula 5]

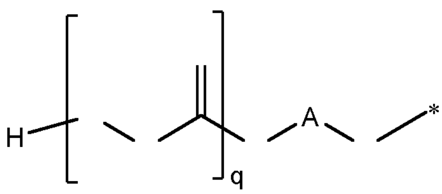

wherein in Chemical Formulas 3 to 5,
A, G, X, p and q are as defined in claim 1.

**3.** The poly(hydroxyalkanoate) according to claim 1,

wherein the poly(hydroxyalkanoate) has at least one carboxyl end group selected from the end groups represented by the following Chemical Formulae 6 to 8:

[Chemical Formula 6]

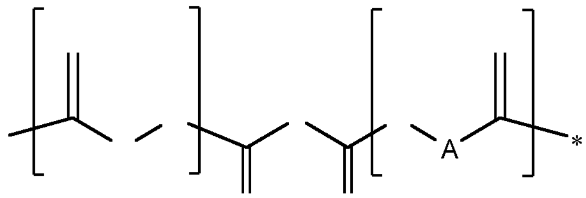

[Chemical Formula 7]

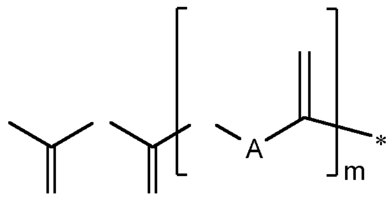

[Chemical Formula 8]

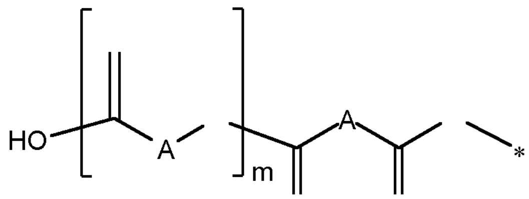

wherein in Chemical Formulas 6 to 8,
Q, R, Y, n and m are as defined in claim 1.

**4.** The poly(hydroxyalkanoate) according to claim 2,
wherein the ratio of the hydroxyl end group at total end groups of the poly(hydroxyalkanoate) is 50% to 99%.

**5.** The poly(hydroxyalkanoate) according to claim 3,
wherein the ratio of the carboxyl end group at total end groups of the poly(hydroxyalkanoate) is 50% to 99%.

**6.** The poly(hydroxyalkanoate) according to claim 1,

wherein the poly(hydroxyalkanoate) further comprises a repeating unit represented by the following Chemical Formula 9:

[Chemical Formula 9]

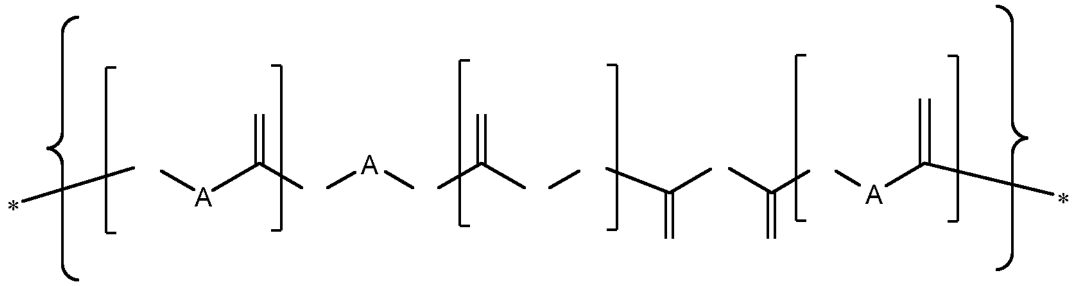

wherein in Chemical Formula 9,
A, G, R, X, and Y are as defined in claim 1, and
b, c, and d are each independently an integer of 1 to 200.

**7.** The poly(hydroxyalkanoate) according to claim 1,

wherein the poly(hydroxyalkanoate) has a ratio of a vinyl group in the end groups of 20 mol% or less,
a yellow index (YI) value of 30 or less,
a nitrogen content of 60 ppm or less, and
an acid value of 10 meq/kg or more and 300 meq/kg or less.

**8.** A method for preparing a poly(hydroxyalkanoate), comprising:

(step 1) subjecting a hydroxyalkanoic acid to polymerization reaction in the presence of a compound having two or more hydroxyl groups to prepare a first oligomer;
(step 2) subjecting a hydroxyalkanoic acid to polymerization reaction in the presence of a compound having two or more carboxyl groups to prepare a second oligomer; and
(step 3) subjecting the first oligomer and the second oligomer to polymerization reaction to prepare a poly(hydroxyalkanoate).

**9.** The method for preparing a poly(hydroxyalkanoate) according to claim 8,

wherein the first oligomer comprises a repeating unit represented by the following Chemical Formula 10:

[Chemical Formula 10]

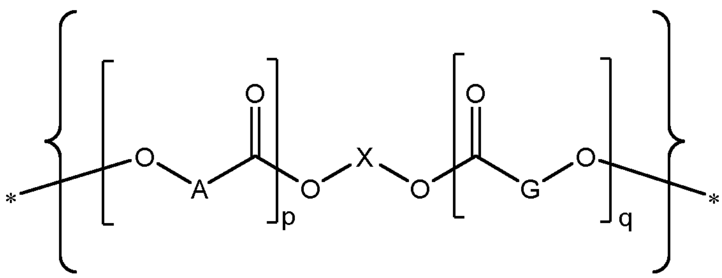

wherein in Chemical Formula 10,
A and G are each independently a substituted or unsubstituted alkylene having 1 to 10 carbon atoms,
X is a substituted or unsubstituted alkylene having 1 to 20 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O and S,
p and q are each independently an integer of 0 to 200, and
p + q is 1 or more.

**10.** The method for preparing a poly(hydroxyalkanoate) according to claim 8,

wherein the second oligomer comprises a repeating unit represented by the following Chemical Formula 11:

[Chemical Formula 11]

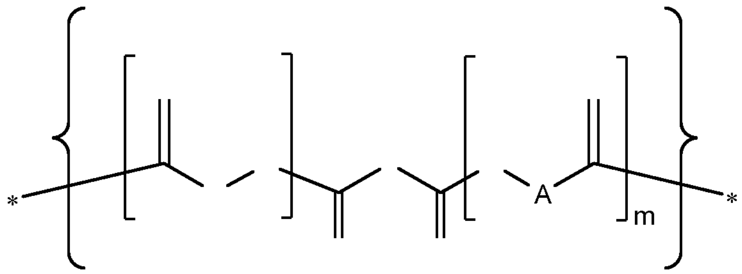

wherein in Chemical Formula 11,
Q and R are each independently a substituted or unsubstituted alkylene having 1 to 10 carbon atoms,
Y is a substituted or unsubstituted alkylene having 1 to 20 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O and S,
n and m are each independently an integer of 0 to 200, and
n + m is 1 or more.

**11.** The method for preparing a poly(hydroxyalkanoate) according to claim 8,
wherein the first oligomer and the second oligomer each independently have a weight average molecular weight of 1,000 or more and 20,000 or less.

**12.** The method for preparing a poly(hydroxyalkanoate) according to claim 8,

wherein the compound having two or more hydroxyl groups is represented by the following Chemical Formula 12:

[Chemical Formula 12] OH- -OH

wherein in Chemical Formula 12,
X is a substituted or unsubstituted alkylene having 1 to 20 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O and S.

**13.** The method for preparing a poly(hydroxyalkanoate) according to claim 8,

wherein the compound having two or more carboxyl groups is represented by the following Chemical Formula 13:

[Chemical Formula 13] - -

wherein in Chemical Formula 13,
Y is a substituted or unsubstituted alkylene having 1 to 20 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O and S.

**14.** The method for preparing a poly(hydroxyalkanoate) according to claim 8,

wherein in the step 1,
the compound having 2 or more hydroxyl groups is used in an amount of 0.1 to 20 parts by weight based on 100 parts by weight of the hydroxyalkanoic acid.

**15.** The method for preparing a poly(hydroxyalkanoate) according to claim 8,

wherein in the step 2,
the compound having 2 or more carboxyl groups is used in an amount of 0.1 to 20 parts by weight based on 100

parts by weight of the hydroxyalkanoic acid.

**16.** The method for preparing a poly(hydroxyalkanoate) according to claim 8,

wherein the step 1 and step 2 further comprises,
drying the hydroxyalkanoic acid before the polymerization reaction.

**17.** **The** method for preparing a poly(hydroxyalkanoate) according to claim 8,

wherein the step 1 and step 2,
are carried out at a temperature of 50°C or more and 150°C or less under a pressure of 1 torr or more and 200 torr or less.

**18.** The method for preparing a poly(hydroxyalkanoate) according to claim 8,

wherein the step 1 and step 2,
are carried out in the presence of a sulfonic acid based catalyst.

**19.** The method for preparing a poly(hydroxyalkanoate) according to claim 8,

wherein in the step 3,
the first oligomer is used in an amount of 0.1 times or more and 10 times or less that of the second oligomer.

**20.** The method for preparing a poly(hydroxyalkanoate) according to claim 8,

wherein the step 3,
is carried out at a temperature of 70°C or more and 150°C or less.

## INTERNATIONAL SEARCH REPORT

International application No.
**PCT/KR2024/001402**

**A. CLASSIFICATION OF SUBJECT MATTER**

**C08G 63/06**(2006.01)i; **C08G 63/78**(2006.01)i; **C08G 63/82**(2006.01)i

According to International Patent Classification (IPC) or to both national classification and IPC

**B. FIELDS SEARCHED**

Minimum documentation searched (classification system followed by classification symbols)

C08G 63/06(2006.01); C08G 63/08(2006.01); C08G 63/60(2006.01); C08G 63/78(2006.01); C08G 63/82(2006.01); C08G 81/00(2006.01); C09D 187/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리하이드록시알카노에이트 (polyhydroxyalkanoate), 말단기(terminal group), 수산기(hydroxy group), 카르복시기(carboxylic acid), 올리고머(oligomer)

**C. DOCUMENTS CONSIDERED TO BE RELEVANT**

| Category* | Citation of document, with indication, where appropriate, of the relevant passages | Relevant to claim No. |
|---|---|---|
| X<br>A | US 2022-0049051 A1 (COVESTRO INTELLECTUAL PROPERTY GMBH & CO. KG) 17 February 2022 (2022-02-17)<br>See paragraphs [0037], [0104] and [0105]; tables 2 and 4; and claims 1, 5, 11 and 12. | 1-7<br>8-20 |
| A | KR 10-2022-0151568 A (LG CHEM, LTD.) 15 November 2022 (2022-11-15)<br>See claims 1-16. | 1-20 |
| A | WO 2006-055049 A1 (ADVANCED CARDIOVASCULAR SYSTEMS, INC. et al.) 26 May 2006 (2006-05-26)<br>See claims 1-38. | 1-20 |
| A | KR 10-2022-0151567 A (LG CHEM, LTD.) 15 November 2022 (2022-11-15)<br>See claims 1-18. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2024** | **01 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**

International application No.
**PCT/KR2024/001402**

**C. DOCUMENTS CONSIDERED TO BE RELEVANT**

| Category* | Citation of document, with indication, where appropriate, of the relevant passages | Relevant to claim No. |
|---|---|---|
| A | KORHONEN, H. et al. Synthesis of poly(ester-anhydride)s based on poly(#-caprolactone) prepolymer. Journal of applied polymer science. 2001, vol. 81, pp. 176-185. See entire document. | 1-20 |

Form PCT/ISA/210 (second sheet) (July 2022)

**INTERNATIONAL SEARCH REPORT**
**Information on patent family members**

International application No.
**PCT/KR2024/001402**

| Patent document cited in search report | Publication date (day/month/year) | Patent family member(s) | Publication date (day/month/year) |
|---|---|---|---|
| US 2022-0049051 A1 | 17 February 2022 | EP 3670569 A1 | 24 June 2020 |
| | | EP 3898759 A1 | 27 October 2021 |
| | | WO 2020-127008 A1 | 25 June 2020 |
| KR 10-2022-0151568 A | 15 November 2022 | CN 117242113 A | 15 December 2023 |
| | | EP 4317244 A1 | 07 February 2024 |
| | | US 2024-0084070 A1 | 14 March 2024 |
| | | WO 2022-235112 A1 | 10 November 2022 |
| WO 2006-055049 A1 | 26 May 2006 | EP 1778764 A1 | 02 May 2007 |
| | | EP 1778764 B1 | 19 January 2011 |
| | | JP 2008-508395 A | 21 March 2008 |
| | | JP 4822222 B2 | 24 November 2011 |
| | | US 2006-0034888 A1 | 16 February 2006 |
| | | US 2013-0116380 A1 | 09 May 2013 |
| | | US 2013-0123422 A1 | 16 May 2013 |
| | | US 2014-0100302 A1 | 10 April 2014 |
| | | US 8357391 B2 | 22 January 2013 |
| | | US 8586075 B2 | 19 November 2013 |
| | | US 8758801 B2 | 24 June 2014 |
| KR 10-2022-0151567 A | 15 November 2022 | CN 117242114 A | 15 December 2023 |
| | | EP 4317245 A1 | 07 February 2024 |
| | | US 2024-0076441 A1 | 07 March 2024 |
| | | WO 2022-235113 A1 | 10 November 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230012861
- KR 1020240013786
- KR 1020210037448
- WO 09022797 A